Europäisches Patentamt

(19) European Patent Office

Office européen des brevets

(11) Veröffentlichungsnummer: **0 215 440**
B1

(12) **EUROPÄISCHE PATENTSCHRIFT**

(45) Veröffentlichungstag der Patentschrift:
03.05.89

(51) Int. Cl.⁴: **H04Q 11/04**, H04Q 1/50

(21) Anmeldenummer: 86112522.7

(22) Anmeldetag: **10.09.86**

(54) Kennzeichenumsetzer-Zentrale eines Zeitmultiplexübertragungssystems.

(30) Priorität: **20.09.85 DE 3533664**

(43) Veröffentlichungstag der Anmeldung:
**25.03.87 Patentblatt 87/13**

(45) Bekanntmachung des Hinweises auf die Patenterteilung:
**03.05.89 Patentblatt 89/18**

(84) Benannte Vertragsstaaten:
**AT BE CH DE FR GB IT LI NL SE**

(56) Entgegenhaltungen:
DE-B- 2 843 179
FR-A- 2 557 751

IBM TECHNICAL DISCLOSURE BULLETIN, Band 25, Nr. 11A, April 1983, Seiten 5793-5795, New York, US; BORGNIS et al.: "PCM links to microprocessor signalling adaptor"
IBM TECHNICAL DISCLOSURE BULLETIN, Band 25, Nr. 11A, April 1983, Seiten 5788-5790, New York, US; HUON et al.: "PCM signalling adaptor in a distributed processing time-division PABX"
TELCOM REPORT, Beiheft
"Digital-Übertragungstechnik", 1979, Seiten 65-71, München, DE; EHRICKE et al.: "Kennzeichenumsetzer zur Übertragung vermittlungstechnischer Zeichen in Digital-Fernsprechverbindungen"

(73) Patentinhaber: **Siemens Aktiengesellschaft Berlin und München, Wittelsbacherplatz 2, D-8000 München 2(DE)**

(72) Erfinder: **Wolfdietrich, Günther, Korbinianstrasse 14, D-8190 Wolfratshausen(DE)**

(56) Entgegenhaltungen: (Fortsetzung)
**COMMUTATION & TRANSMISSION, Band 6, Nr. 3, September 1984, Seiten 5-20, Issy-les-Moulineaux, FR; TANGUY et al.: "Adaptateurs de signalisation"**

## Beschreibung

Die Erfindung betrifft eine Kennzeichenumsetzer-Zentrale nach dem Oberbegriff des Patentanspruchs 1.

Beim Einsatz von Zeitmultiplex-Übertragungssystemen ist es notwendig, die vermittlungstechnischen Informationen zu digitalisieren und in eine für digitale Datenübertragung geeignete Form umzusetzen. Ein Kennzeichenumsetzergerät für das Zeitmultiplex-Übertragungssystem PCM 30 ist in der Siemens-Zeitschrift 49 (1975), Heft 7, Seite 466 bis 472 beschrieben. Die vermittlungstechnischen Signale (Schaltkennzeichen) auf der analogen Übertragungsseite werden für jeden Fernsprechkanal in vier Bits breite Kennzeichenwörter umgesetzt, die, eingefügt in den Zeitmultiplexrahmen, übertragen werden. In Abhängigkeit von dem jeweils vorgeschriebenen Signalisierungssystem wird ein spezieller kanalindividueller Kennzeichenumsetzer verwendet, der mehrere Kennzeichenumsetzer-Baugruppen enthält.

Aus der europäischen Patentschrift 0 002 467, und der FR-A 2 557 751 ist eine Kennzeichenumsetzer-Zentrale bekannt, deren zentraler Verarbeitungteil mit Hilfe von Rechnerschaltungen realisiert ist. Eine mögliche Ausführung des zentralen Verarbeitungsteils ist nicht beschrieben.

Beim jetzigen Stand der Technologie werden für die Verarbeitung der Kennzeichenwörter Multi-Mikroprozessor-Systeme verwendet. Die Anpassung an die verschiedenen Signalisierungssysteme erfolgt durch eine entsprechend hohe Anzahl von Ausführungsformen von kanalindividuellen Kennzeichenumsetzern.

Aufgabe der Erfindung ist es, eine Kennzeichenumsetzer-Zentrale anzugeben, die mit nur zwei Mikroprozessoren realisierbar ist und eine Anpassung an unterschiedliche Signalisierungsnormen gestattet.

Diese Aufgabe wird durch die im Patentanspruch 1 angegebenen Merkmale gelöst. Vorteilhafte Ausbildungen der Erfindung sind in den Unteransprüchen angegeben.

Der Synchronprozessor übernimmt hierbei den Datenaustausch sowohl mit der PCM-Schnittstelle als auch mit dem Kennzeichenumsetzer. Der Logikprozessor sorgt für die logische Anpassung an die verschiedenen Signalisierungssysteme und übernimmt ebenfalls die logische Anpassung zwischen Analog-System und PCM-System, gegebenenfalls unter Berücksichtigung der vorangegangenen Vermittlungszustände. In seinen Aufgabenbereich fällt auch die Bildung von Schutzzeiten und die Korrektur der Wählimpulse. Neben einer optimalen Programmierung ist es durch die zeitsparende Datenübergabe zwischen Synchron-Prozessor und Logik-Prozessor möglich geworden, mit nur zwei Mikroprozessoren bei der Realisierung der Kennzeichenumsetzer-Zentrale auszukommen. Sobald Daten vom Synchron-Prozessor zum Logik-Prozessor oder umgekehrt übergeben werden sollen, werden diese zusammen mit der Zieladresse in ein Register eingespeichert und ohne Programmunterbrechung in den Schreib-Lese-Speicher des Zielprozessors übernommen.

Ein Ausführungsbeispiel der Erfindung wird anhand der Fig. 1 bis 3 näher beschrieben.

Es zeigen
Fig. 1 ein Prinzipschaltbild der Kennzeichenumsetzer-Zentrale,
Fig. 2 einen Pulsrahmen und
Fig. 3 ein genauer ausgeführtes Prinzipschaltbild zur Datenübergabe.

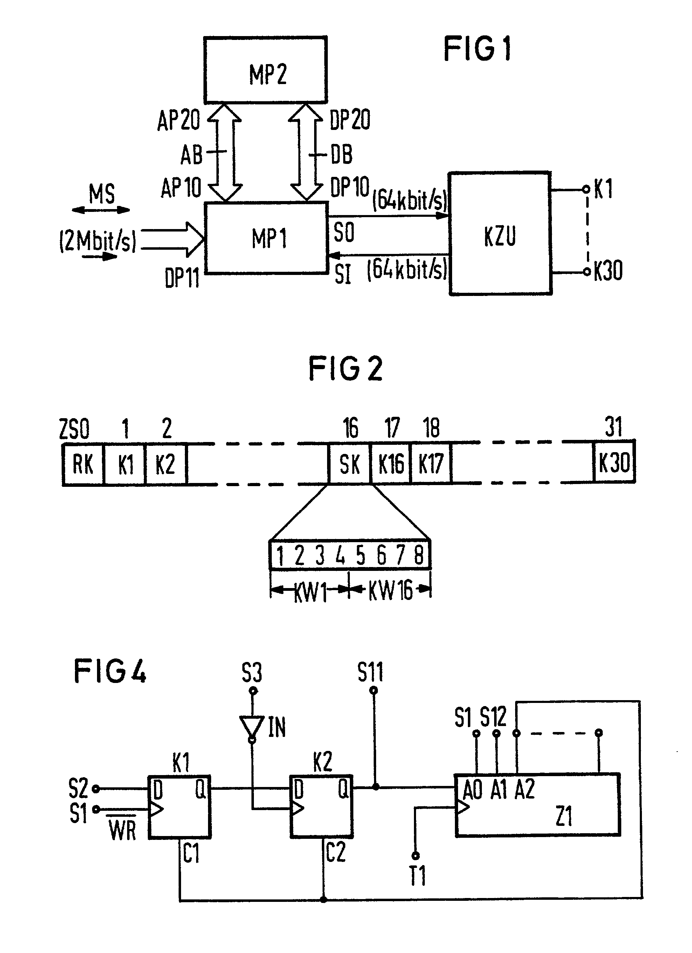

Die in Fig. 1 dargestellte Kennzeichenumsetzer-Zentrale enthält im wesentlichen zwei Mikroprozessoren, den Synchron-Prozessor MP1, den Logik-Prozessor MP2 und einen Kennzeichenumsetzer KZU. Die Adressenports AP10 und AP20 der Mikro-Prozessoren sind durch einen Adressenbus AB verbunden, ebenso sind die Datenports DP10 und DP20 durch einen Datenbus DB verbunden. Über einen weiteren Datenport DP11 wird dem Synchron-Prozessor MP1 das Multiplexsignal MS zugeführt. An diesem Datenport gibt er in der Gegenrichtung die Kennzeichenwörter zum Einfügen in das Multiplexsignal ab. Eine hier nicht dargestellte Synchronisiereinrichtung sorgt dafür, daß der Synchron-Prozessor aus dem Multiplexsignal jeweils die Kennzeichenwörter übernimmt, von denen jeweils zwei zu einem Kennzeichen-Datenwort zusammengefaßt sind. Über einen seriellen Ausgang S0 und einen seriellen Eingang SI ist der Synchron-Prozessor mit dem Kennzeichenumsetzer KZU verbunden, an den 30 Fernsprechkanäle K1 bis K30 angeschaltet sind.

Der Kennzeichenumsetzer sorgt für die elektrische Anpassung an das Analog-System, digitalisiert die analogen Schaltkennzeichen und gibt sie als Kennzeicheninformation über einen seriellen Ausgang an den Synchron-Prozessor weiter. Die Übertragung zwischen Kennzeichenumsetzer und Synchron-Prozessor erfolgt byteweise. Nach Bearbeitung dieser Kennzeicheninformation durch die Mikroprozessoren wird die vermittlungstechnische Information zu jeweils 4 Bits umfassende Kennzeichenwörter zusammengefaßt und am Datenport DP11 ausgesendet, wobei wieder zwei Kennzeichenwörter zu einem Kennzeichen-Datenwort zusammengefaßt sind. In der Gegenrichtung erfolgt eine entsprechende Umsetzung. Durch die Verwendung von mehr als 4 Bits für die Kennzeicheninformation ist eine optimale Anpassung an die verschiedenen Signalisierungssysteme möglich; es muß ggfs. nur der Programmspeicher des Logik-Prozessors ausgewechselt werden.

In Fig. 2 ist der Pulsrahmen des Übertragungssystems PCM30 dargestellt, das hier zur Erläuterung der Erfindung herangezogen wird. Der Pulsrahmen umfaßt 32 jeweils ein Byte breite Zeitschlitze ZS0 bis ZS31. Im ersten Zeitschlitz ZS0 wird das Rahmenkennungswort RK und das Meldewort übertragen. In den weiteren Zeitschlitzen ZS1 bis ZS15 wird jeweils ein Byte eines Fernsprechkanals übertragen. Der Zeitschlitz ZS16 wird als Signalisierungskanal SK bezeichnet, in ihm werden jeweils zwei Kennungswörter, beispielsweise KW1 und KW16 der Fernsprechkanäle K1 und K16 übertragen. Anschließend werden die Kennungswörter KW2 und KW17 der Fernsprechkanäle K2 und K17 übertragen usw. Ein Pulsrahmen des PCM 30-Systems hat eine Dauer von 125 µs. Die Erfindung ist jedoch keineswegs auf diesen speziellen Pulsrahmen beschränkt, sondern sie kann allgemein verwendet werden.

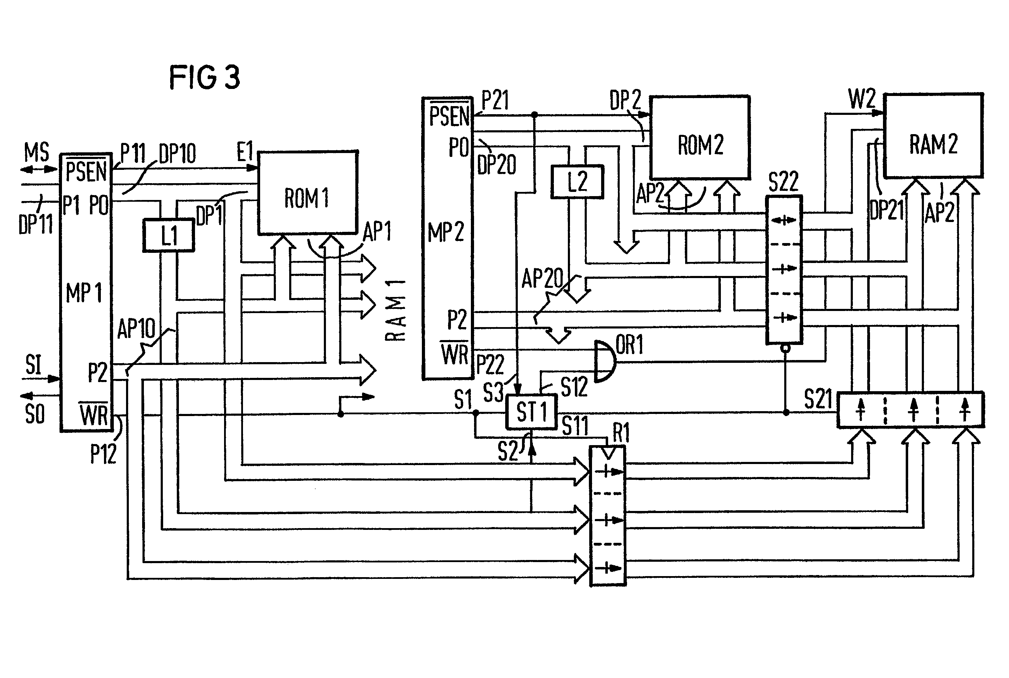

In Fig. 3 ist ein ausführlicheres Prinzipschaltbild für die Datenübertragung vom Synchron-Prozessor MP1 zum Logik-Prozessor MP2 dargestellt. Verwendet werden Mikroprozessoren vom Typ SAB 8031 der Fa. Siemens. Der besseren Übersicht wegen wurden die Original-Signalbezeichnungen innerhalb des Mikroprozessor-Bausteines beibehalten. Ein erster Port DP10 (P0) dient sowohl als Datenport als auch als Adressenport für den niederwertigeren Adressenteil. Dieser wird in einem Latch L1 (Register) zwischengespeichert. Zusammen mit einem zweiten Port P2 bildet der Ausgang des ersten Latches L1 den Adressenport AP10, der an den entsprechenden Adressenport AP1 des zugehörigen Lese-Speichers ROM1 (Programmspeicher) und mit Eingängen eines ersten Registers R1 verbunden ist. Der Datenport DP10 (P0) ist direkt mit dem Datenport DP1, des Lese-Speichers ROM1 und mit weiteren Eingängen des Registers R1 verbunden. An einem Ausgang P11 des Synchron-Prozessors wird ein Speicherzugriff-Signal (PSEN) abgegeben, das mit einem entsprechenden Enable-Eingang E1 des Lesespeichers ROM1 verbunden ist. Außerdem wird in einem weiteren Ausgang P12 ein Schreibimpuls WR abgegeben, der mit dem Takteingang des Registers R1 und mit dem Eingang S1 einer ersten Steuerung ST1 verbunden ist.

Die Verbindungen von Datenbus und Adressenbus zu einem zugehörigen Schreib-Lese-Speicher RAM1 (Arbeitsspeicher) sind nur angedeutet. Die Verwendung des Datenports DP11 (P1) sowie des seriellen Eingangs SI und des seriellen Ausgangs SO sind aus der Beschreibung des Blockschaltbildes Fig. 1 bekannt. Die Ausgänge des ersten Registers R1 sind über eine erste Bustrennstufe S21 mit dem Datenport DP21 und dem Adressenport AP21 des Schreib-Lese-Speichers RAM2 des Logik-Prozessors MP2 verbunden. Dessen Datenport DP20 ist – entsprechend der Verdrahtung des Synchron-Prozessors – mit dem Datenport DP2 eines zugehörigen Lese-Speichers ROM2 verbunden. Über ein zweites Latch L2 bildet der Datenport DP20 zusammen mit dem zweiten Port (P2) des Mikro-Prozessors einen Adressenport AP20, der mit dem Adressenport AP2 des zugehörigen Lese-Speichers ROM2 verbunden ist und gemeinsam mit dem Datenport DP20 über eine zweite Bustrennstufe S22 ebenfalls mit dem Datenport DP21 und dem Adressenport AP2 des Schreib-Lese-Speichers RAM2 verbunden ist.

Die Steuerung ST1 weist zwei weitere Steuereingänge S2 und S3 auf. Über den zweiten Steuereingang S2 erhält sie – hier über ein spezielles nicht benötigtes Adressenbit – ein Aktivierungssignal, wenn Daten in das Register R1 eingeschrieben werden. Der dritte Steuereingang S3 ist mit dem Ausgang P21 des Logik-Prozessors verbunden, an dem das Speicherzugriff-Signal PSEN abgegeben wird, das hauptsächlich zur Steuerung des Lese-Speichers ROM1 (Programmspeichers) benötigt wird. Die Steuerung weist zwei Steuerausgänge auf. Der erste Steuerausgang S11 ist mit Steuereingängen der beiden Bustrennstufen S21 und S22 verbunden. Der zweite Steuerausgang S12 ist über ein ODER-Gatter OR1 mit dem Schreibimpulseingang W2 des Schreib-Lese-Speichers RAM2 verbunden. Der zweite Eingang des ODER-Gatters OR1 ist an den Schreibausgang P22 des Logikprozessors angeschlossen.

Für die Datenübergabe vom Logikprozessor zum Synchronprozessor sind eine zweite Steuerung, ein zweites Register und zwei weitere Bustrennstufen erforderlich, auf deren Darstellung in der Fig. 3 aus Gründen der Übersichtlichkeit verzichtet wurde. Dies ist angedeutet, indem der Datenbus und der Adressbus des Logik-Prozessors MP2 mit Pfeilen versehen sind. Über das zweite Register und eine nachgeschaltete Bustrennstufe sind diese Busse dann mit dem Datenport und dem Adressenport des Schreib-Lese-Speichers RAM des Synchronsprozessors verbunden, dessen Daten und Adressenport über eine S22 entsprechende weitere Bustrennstufe von den Ports seines Schreib-Lese-Speichers RAM1 abtrennbar sind.

Bei der Datenübergabe vom Synchron-Prozessor MP1 zum Logikprozessor MP2 wird zunächst der niederwertige Teil der Zieladresse im ersten Latch L1 abgespeichert. Zusammen mit dem am Port (P2) abgegebenen hochwertigen Teil der Zieladresse liegt jetzt eine komplette Adresse an den entsprechenden Eingängen des ersten Registers R1 an; die Daten werden über den Datenport DP10 abgegeben und liegen ebenfalls an den entsprechenden Eingängen des ersten Registers an. Jeder Bus hat hier eine Breite von 8 Bits. Über eine hier nicht benötigte Adressenleitung wird die Steuerung ST1 davon informiert, daß ein Datenwort mit zugehöriger Adresse in das erste Register eingeschrieben werden soll. Mit dem vom Synchron Prozessor abgegebenen Schreibbefehl WR werden Daten und Adresse in das erste Register R1 eingeschrieben und die Steuerung aktiviert. Diese wartet auf das entsprechende Speicherzugriff-Signal des Logik-Prozessors MP2, das anzeigt, daß der Logik-Prozessor für eine ausreichende Zeitdauer keine Daten aus seinem Schreib-Lese-Speicher RAM2 benötigt und auch keine Daten eingeschrieben werden sollen. Ausgelöst von der negativen Flanke des Speicherzugriff-Signals wird die erste Bustrennstufe S21 durchgeschaltet und die zweite Bustrennstufe S22 gesperrt; anschließend wird über den Schreib-Steuerausgang S12 der Steuerung und das ODER-Gatter OR1 ein Schreibimpuls an den Schreib-Lese-Speicher RAM2 abgegeben und somit werden die Daten unter der entsprechenden Adresse abgespeichert. Der Synchron-Prozessor konnte die Daten übergeben, ohne vom Logik-Prozessor abhängig zu sein, in dessen Schreib-Lese-Speicher sie eingeschrieben wurden, ohne das dieser sein Programm unterbrechen mußte. Über das ODER-Gatter OR1 ist es möglich, daß sowohl die Steuerung ST1 einen Schreibimpuls abgibt als auch der Logik-Prozessor bei üblichem Rechnerbetrieb.

Die ODER-Funktion kann natürlich auch mit Hilfe von Three-State-Ausgängen realisiert werden. Eine Datenübertragung vom Logik-Prozessor zum Synchron-Prozessor erfolgt in derselben Weise.

Es ist denkbar, daß die vorstehend beschriebene Datenübertragung auch nur in einer Richtung erfolgt.

Die Bustrennstufe S21 kann entfallen, wenn das erste Register R1 Three-State-Ausgänge aufweist.

In Fig. 4 ist ein Ausführungsbeispiel der Steuerung ST1 dargestellt. Sie enthält zwei D-Kippstufen und einen Zähler 21. Der D-Eingang der ersten Kippstufe K1 ist mit dem Steuereingang S2 verbunden, der Takteingang dieser Kippstufe ist mit dem Steuereingang S1 verbunden, an dem der invertierte Schreib-Impuls WR̄ liegt. Der Q-Ausgang der Kippstufe K1 ist mit dem D-Eingang der zweiten Kippstufe K2 verbunden. Über einen Inverter IN liegt der Takteingang dieser Kippstufe am dritten Steuereingang S3. Der Q-Ausgang der zweiten Kippstufe bildet den Steuerausgang S11 und ist außerdem mit dem Rücksetzeingang des Zählers Z1 verbunden, der als Impulsformer arbeitet. Seinem Takteingang T1 wird der Arbeitstakt der Mikro-Prozessoren zugeführt. An seinem Ausgang A1 wird der Schreibimpuls abgegeben, an seinem Ausgang A2 wird ein Rücksetzimpuls entnommen, der die beiden Kippstufen K1 und K2 in ihrer Ruhelage zurücksetzt.

Die erste Kippstufe K1 wird dann eingestellt, wenn am Steuereingang S2 das Aktivierungssignal anliegt, d.h. Daten und Adresse werden in das erste Register R1 eingespeichert, und am Steuereingang S1 der Schreibimpuls WR̄ auftritt. Durch das Einstellen der ersten Kippstufe wird ermöglicht, daß beim Auftreten des Speicherzugriffs Signals PSEN am Steuereingang S3 die zweite Kippstufe K2 eingestellt wird und damit die erste Bustrennstufe S21 durchgeschaltet und die zweite Bustrennstufe S20 aufgetrennt wird. Durch das Einstellen der zweiten Kippstufe wird der Zähler Z1 freigegeben, der bei seinem nächsten Zählzustand am Ausgang A1 (Steuerausgang S12) einen Schreibimpuls abgibt, der zum Einschreiben der Daten in den zweiten Schreib-Lese-Speicher RAM2 verwendet wird. Die nächste Zählerstellung wird dazu benutzt die beiden Kippstufen K1 und K2 über ihre Clear-Eingänge C1 und C2 rückzustellen.

Bezugszeichenliste

MP1 Synchron-Prozessor
MP2 Logik-Prozessor
KZU Kennzeichenumsetzer
AB Adressenbus
AP10,AP20 Adressenport
DB Datenbus
DP10,DP20 Datenport
DP11 weiterer Datenport
MS Multiplexsignal
S0 serieller Ausgang
S1 serieller Eingang
K1...K30 Fernsprechkanäle
KW1,KW16 Kennzeichenwort
ZS0,ZS1,... Zeitschlitze
SK Signalisierungskanal

DP10 erster Port
P2 zweiter Port
DP1 Datenport des Lese-Speichers ROM1
R1 Register
P11 Ausgang
P12 weiterer Ausgang
S1 Eingang der Steuerung
ST1 Steuerung
DP2 Datenport des Lese-Speichers ROM2
S2,S3 zweiter, dritter Steuereingang
S11 erster Steuerausgang
S21,S22 Bustrennstufen
OR1 ODER-Gatter
W2 Schreibimpulseingang
P22 Schreibausgang
RAM2 Schreib-Lese-Speicher
K1,K2 erste, zweite Kippstufe
Z1 Zähler
T1 Takteingang
IN Inverter

**Patentansprüche**

1. Kennzeichenumsetzer-Zentrale eines Zeitmultiplex-Übertragungssystems mit einer Multiplexeinrichtung, einem zentralen Verarbeitungsteil und einem kanalindividuellen Kennzeichen-Umsetzerteil (KZU), dadurch gekennzeichnet, daß der zentrale Verarbeitungsteil einen Synchron-Prozessor (MP1) und einen Logik-Prozessor (MP2) jeweils mit zugehörigem Programm-Speicher (ROM1, ROM2) und Schreib-Lese-Speicher (RAM1, RAM2) enthält, daß der Synchron-Prozessor (MP1) die im PCM-Multiplexsignal (MS) enthaltenen Kennzeichenwörter (KW) empfängt und – gegebenenfalls nach einer Verarbeitung und Umsetzung – als Signalisierungsinformation an den Kennzeichen-Umsetzerteil (KZU) weitersendet und ebenso die vom Kennzeichen-Umsetzerteil (KZU) in Signalisierunginformation umgesetzten Schaltkennzeichen – gegebenenfalls nach einer Verarbeitung und Umsetzung – als Kennzeichenwörter zum Einfügen in den PCM-Multiplexrahmen aussendet, daß zur Übergabe von Daten zwischen Synchron-Prozessor (MP1) und dem Logik-Prozessor (MP2) zwischen dem Datenport (DP1) des Synchron-Prozessors (MP1) und dem Datenport (DP2) des Logik-Prozessors (MP2) für jede Übertragungsrichtung ein Register (R1) mit nachgeschalteter Bustrennstufe (S21) eingeschaltet sind, in die der Daten aussendende Prozessor seine Daten und die zugehörige Zieladresse einspeichert, daß jeweils eine zweite Bustrennstufe (S22) zwischen Datenport (DP2), Adressenport (AP2) jeden Prozessors (MP1, MP2) und dem Datenport (DP21), Adressenport (AP2) des zugehörigen Schreib-Lese-Speichers (RAM2) eingeschaltet ist, daß jeweils eine Steuerung (ST1) vorgesehen ist, die bei jeder Datenübergabe beim Einschreiben in die Register (R1) ein Aktivierungssignal erhält, und in Abhängigkeit von einem Speicher-Zugriffs-Signal (PSEN) des Daten empfangenden Prozessors (MP2) während der Datenübergabe die zweite Bustrennstufe (S21) durchschaltet und anschließend ein Schreib-Impuls an den Datenspeicher (RAM2) abgibt.

2. Kennzeichenumsetzer-Zentrale nach Anspruch 1, dadurch gekennzeichnet, daß das Register (R1) Three-State-Ausgänge aufweist und die nachgeschaltete Bustrennstufe (S21) entfällt.

3. Kennzeichenumsetzer-Zentrale nach Anspruch 1, dadurch gekennzeichnet, daß der Synchron-Prozessor (MP1) und der Logik-Prozessor (MP2) jeweils nur einen Mikroprozessor enthält.

4. Kennzeichenumsetzer-Zentrale nach Anspruch 1, dadurch gekennzeichnet, daß als Speicher-Zugriffs-Signal bei Mikroprozessoren des Typs SAB 8031/8051 das PSEN-Signal verwendet wird.

5. Kennzeichenumsetzer-Zentrale nach Anspruch 1, dadurch gekennzeichnet, daß der Schreib-Ausgang (P22) eines Mikroprozessors mit dem Schreib-Steuerausgang (S12) der Steuerung (ST1) über eine ODER-Schaltung (OR1) zusammengefaßt ist.

6. Kennzeichenumsetzer-Zentrale nach Anspruch 1, dadurch gekennzeichnet, daß als Aktivierungskriterium für die Steuerung ein spezielles nicht zur Adressierung benötigtes Bit der Adresse vorgesehen ist.

## Claims

1. Signalling conversion centre for a time-division multiplexing transmission system having a multiplexing device, a central processing part and a channel-specific signalling conversion part (KZU), characterized in that the central processing part contains a synchronous processor (MP1) and a logic processor (M2) each with associated program memory (ROM1, ROM2) and read/write memory (RAM1, RAM2), in that the synchronous processor (MP1) receives the signalling words (KW) contained in the PCM multiplexed signal (MS) and – if appropriate after processing and conversion – forwards them as signalling information to the signalling conversion part (KZU) and likewise sends out the switching signals converted into signalling information by the signalling conversion part (KZU) – if appropriate after processing and conversion – as a signalling words for insertion into the PCM multiplexing frame, in that, for transferring data between synchronous processor (MP1) and the logic processor (MP2), a register (R1) with downstream bus separator stage (S21) is inserted between the data port (DP1) of the synchronous processor (MP1) and the data port (DP2) of the logic processor (MP2) for each transmission direction, in which register the processor sending out the data stores its data and the associated destination address, in that in each case a second bus separator stage (S22) is inserted between data port (DP2), address port (AP2) of each processor (MP1, MP2) and the data port (DP21), address port (AP2) of the associated read/write memory (RAM2), in that in each case a controller (ST1) is provided which receives for each data transfer upon writing into register (R1) an activation signal and which, in dependence on a memory access signal (PSEN) of the processor (MP2) receiving the data, switches through the second bus separator stage (S21) during the data transfer and subsequently outputs a write pulse to the data memory (RAM2).

2. Signalling conversion centre according to Claim 1, characterized in that the register (R1) has three state outputs and the downstream bus separator stage (S21) is omitted.

3. Signalling conversion centre according to Claim 1, characterized in that the synchronous processor (MP1) and the logic processor (MP2) each contain only one microprocessor.

4. Signalling conversion centre according to Claim 1, characterized in that the PSEN signal is used as a memory access signal for microprocessors of the type SAB 8031/8051.

5. Signalling conversion centre according to Claim 1, characterized in that the write output (P22) of a microprocessor is combined with the write control output (S12) of the controller (ST1) via an OR circuit (OR1).

6. Signalling conversion centre according to Claim 1, characterized in that a special bit of the address which is not required for addressing is provided as an activation criterion for the controller.

## Revendications

1. Central de conversion de signaux caractéristiques d'un système de transmission à multiplexage temporel comportant un dispositif de multiplexage, une partie centrale de traitement et une partie (KZU) de conversion de signaux caractéristiques, prévue pour chaque canal, caractérisé par le fait que la partie centrale de traitement contient un processeur synchrone (MP1) et un processeur logique (MP2), auxquels sont respectivement associés une mémoire de programmes (ROM1, ROM2) et une mémoire d'enregistrement-lecture (RAM1, RAM2), que le processeur synchrone (MP1) reçoit les mots (KW) de signaux caractéristiques, contenus dans le signal de multiplexage MIC (MS) et – éventuellement après un traitement et une conversion – réémet ces mots sous la forme d'une information de signalisation en direction de la partie (KZU) de conversion des signaux caractéristiques et émet également les signaux caractéristiques de commutation convertis par la partie (KZU) de conversion des signaux caractéristiques en une information de signalisation – éventuellement après un traitement et une conversion – sous la forme de mots de signaux caractéristiques en vue de leur insertion dans la trame de multiplexage MIC, que pour le transfert de données entre le processeur synchrone (MP1) et le processeur logique (MP2), un registre (R1) est inséré entre l'accès de données (DP1) du processeur synchrone (MP1) et l'accès de données (DP2) du processeur logique (MP2) pour chaque sens de transmission, ce registre comportant un étage (S1) de séparation du bus, qui est branché en aval et dans lequel le processeur émettant des données mémorise ces données et l'adresse de destination associée,

qu'un second étage respectif (S22) de séparation du bus est branché entre l'accès de données (DP2), l'accès d'adresse (AP2) de chaque processeur (MP1, MP2) et l'accès de données (DP21), l'accès d'adresses (AP2) de la mémoire associée d'enregistrement-lecture (RAM2) qu'il est prévu un dispositif respectif de commande (ST1), qui lors de chaque transmission de données, lors de l'enregistrement dans le registre (R1), reçoit un signal d'activation et, en fonction d'un signal (PSEN) d'accès en mémoire du processeur (MP2) recevant des données, rend passant le second étage (S21) de séparation du bus, pendant la transmission des données et envoie ensuite une impulsion d'enregistrement à la mémoire de données (RAM2).

2. Central de conversion de signaux caractéristiques suivant la revendication 1, caractérisé par le fait que le registre (R1) comporte des sorties trois-états et que l'étage aval (S21) de séparation du bus est supprimé.

3. Central de conversion de signaux caractéristiques suivant la revendication 1, caractérisé par le fait que le processeur synchrone (MP1) et le processeur logique (MP2) contiennent chacun un seul microprocesseur.

4. Central de conversion de signaux caractéristiques suivant la revendication 1, caractérisé par le fait qu'on utilise le signal (PSEN) en tant que signal d'accès en mémoire dans des microprocesseurs du type SAB 8031/8051.

5. Central de conversion de signaux caractéristiques suivant la revendication 1, caractérisé par le fait que la sortie d'enregistrement (P22) d'un microprocesseur est réunie à la sortie de commande d'enregistrement (S12) du dispositif de commande (ST) par l'intermédiaire d'un circuit OU (OR1).

6. Central de conversion de signaux caractéristiques suivant la revendication 1, caractérisé par le fait qu'il est prévu, comme critère d'activation pour la commande, un bit particulier de l'adresse, non nécessaire pour l'adressage.

# FIG 1

# FIG 2

# FIG 4

FIG 3

EP 0 215 440 B1